# FASCICULE DE BREVET EUROPEEN

(11) **EP 0 468 873 B1**
(45) Date de publication et mention de la délivrance du brevet: **24.08.1994**
(21) Numéro de dépôt: 91402033.4
(22) Date de dépôt: 22.07.1991
(51) Int. Cl.: B60R 13/04, F16B 11/00, F16B 5/12

(54) **Dispositif de fixation par collage d'un enjoliveur sur un élément tel que par exemple un toit de véhicule**
Vorrichtung zum Aufkleben einer Zierleiste auf ein Element, wie z.B. ein Fahrzeugdach
Device for fixing by glueing a molding to an element such as the roof of a vehicle

(30) Priorité: 24.07.1990 FR 9009454
(43) Date de publication de la demande: 29.01.1992
(73) Titulaire: AUTOMOBILES PEUGEOT, 75116 Paris (FR); AUTOMOBILES CITROEN, 92200 Neuilly-sur-Seine (FR)
(72) Inventeur: Clercq, Jean-Claude, F-91700 Villiers-sur-Orge (FR)
(74) Mandataire: Durand, Yves Armand Louis

(56) Documents cités:
- DE-A- 2 845 708
- US-A- 4 709 525
- PATENT ABSTRACTS OF JAPAN, vol. 8, no. 207 (M-327)(1644), 21 Septembre 1984 & JP-A-59 096 028 (NISSAN JIDOSHA K.K.) 2 Juin 1984
- PATENT ABSTRACTS OF JAPAN vol. 12, no. 169 (M-699)(3016)20 Mai 1988 & JP-A-62 283 032 ( NISSAN MOTOR CO LTD ) 8 Décembre 1987

## Description

La présente invention se rapporte d'une manière générale à la fixation d'un enjoliveur sur un élément tel que par exemple un toit de véhicule.

Elle vise plus particulièrement un dispositif de fixation par clippage et collage d'un enjoliveur de pavillon formant liaison entre ce pavillon, les portes du véhicule et la vitre de custode.

On a déjà proposé des enjoliveurs fixés par collage sur par exemple un pavillon de véhicule. Mais, bien souvent, la fixation demeure aléatoire en raison du fait que l'enjoliveur n'est pas maintenu appliqué contre l'élément qui le reçoit pendant tout le temps de polymérisation et de séchage de la colle.

Par ailleurs, on connaît d'après le document JP-A-283032/87 un dispositif de fixation par clippage d'un enjoliveur qui revêt une structure relativement complexe. Selon cette structure, l'enjoliveur (30) comporte des rebords longitudinaux bombés (30a,30b) dans lesquels est inséré un clip intermédiaire (1) qui est indépendant de l'enjoliveur et qui comporte des bords (3a,3b) respectivement retenus dans les rebords longitudinaux (30a,30b) de l'enjoliveur. Le clip (1) comporte deux languettes (4,5) qui coopèrent avec des languettes (12,13a,13b) appartenant à une attache (11) fixée par un adhésif double-face (17) sur le toit. Il en résulte que cette structure, au demeurant compliquée et peu fiable, ne permet pas une fixation de l'enjoliveur par clippage et collage direct sur un élément solidaire du toit.

La présente invention a pour but de proposer un dispositif de fixation d'un enjoliveur dont la conception est telle qu'à la fixation il est maintenu fermement appliqué contre l'élément qui le reçoit de façon à assurer ainsi un contact intime avec cet élément pour permettre un collage et une fixation efficaces.

A cet effet, l'invention a pour objet un dispositif de fixation par clippage et collage d'un enjoliveur sur un élément tel que par exemple un toit de véhicule (Dispositif du type divulgué, par exemple, par JP-A-283032/87), caractérisé en ce que l'enjoliveur comporte sur l'une de ses faces un premier groupe de nervures, bossages ou analogues entre lesquels peut être montée par clippage au moins une languette arquée et élastiquement déformable appartenant audit élément, de façon à assurer le maintien de l'enjoliveur en appui contre cet élément et le collage par des cordons de colle de l'élément sur un deuxième groupe de nervures, bossages ou analogues appartenant à l'enjoliveur.

Suivant un mode de réalisation de l'invention, les nervures ou bossages du deuxième groupe sont situés de part et d'autre des nervures ou bossages du premier groupe qui s'étendent suivant sensiblement l'axe longitudinal médian de l'enjoliveur.

Suivant un mode de réalisation de l'invention, la languette arquée précitée est retenue par son bord libre sur une lèvre, un ergot ou analogue prévu à l'extrémité libre de nervures ou bossages du premier groupe.

Suivant un mode de réalisation préférée, la languette arquée précitée est réalisée par découpage et repliement du bord d'une bande de tôle ou autre matériau solidaire de l'élément ou toit de véhicule.

Cette bande comporte des bords opposés relevés lui conférant sensiblement une forme de U en section transversale et permettant la dépose des cordons de colle qui seront écrasés par le deuxième groupe de nervures ou bossages de l'enjolivèur.

Suivant un mode de réalisation préféré, le premier groupe de nervures ou bossages est constitué par des bossages alignés et séparés par un intervalle en regard duquel est prévu, un intervalle sur deux, un autre bossage, tandis que le deuxième groupe de nervures ou bossages est constitué par une pluralité de bossages alignés et par une nervure.

L'enjoliveur comporte encore, au niveau de ses bords longitudinaux, deux nervures s'étendant respectivement de part et d'autre des bossages alignés cités en dernier lieu et de la nervure.

Mais d'autres caractéristiques et avantages de l'invention apparaitront mieux dans la description détaillée qui suit et se réfère aux dessins annexés, donnés uniquement à titre d'exemple, et dans lesquels.

La figure 1 est une vue schématique et en perspective d'un véhicule dont le pavillon est muni d'un enjoliveur fixé suivant les principes de l'invention pour assurer la liaison entre ledit pavillon, les portes latérales, et la vitre de custode du véhicule.

La figure 2 est une vue en coupe suivant la ligne II-II de la figure 1.

La figure 3 est une vue similaire à la figure 2, mais montrant l'enjoliveur en position détachée du pavillon du véhicule.

La figure 4 est une vue partielle et de dessus du pavillon suivant la flèche IV de la figure 3.

La figure 5 est une vue partielle et de dessous de l'enjoliveur suivant la flèche V de la figure 3.

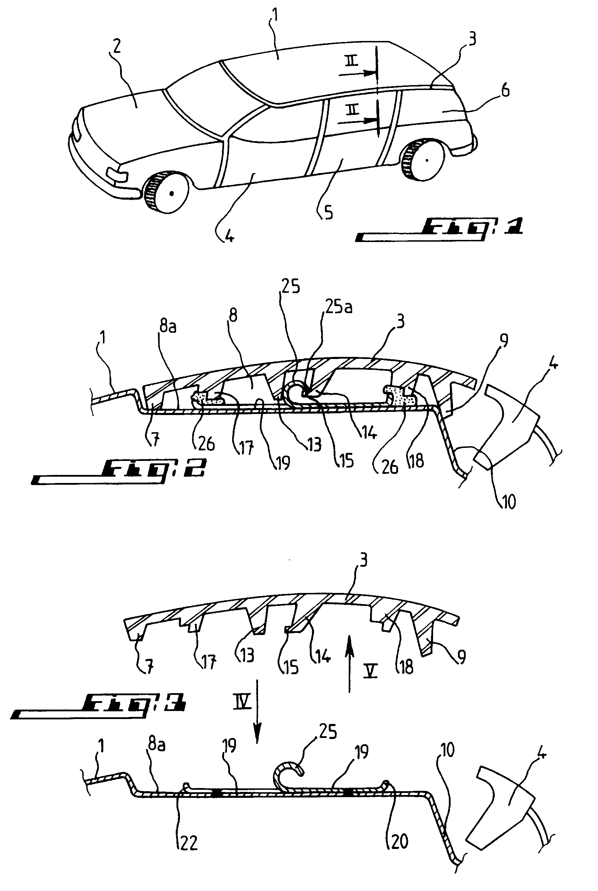

En se reportant à la figure 1, on voit un véhicule 2 dont le toit ou pavillon 1 est muni d'un enjoliveur 3 assurant la liaison entre ledit pavillon, les portes 4 et 5 et la vitre de custode 6 du véhicule.

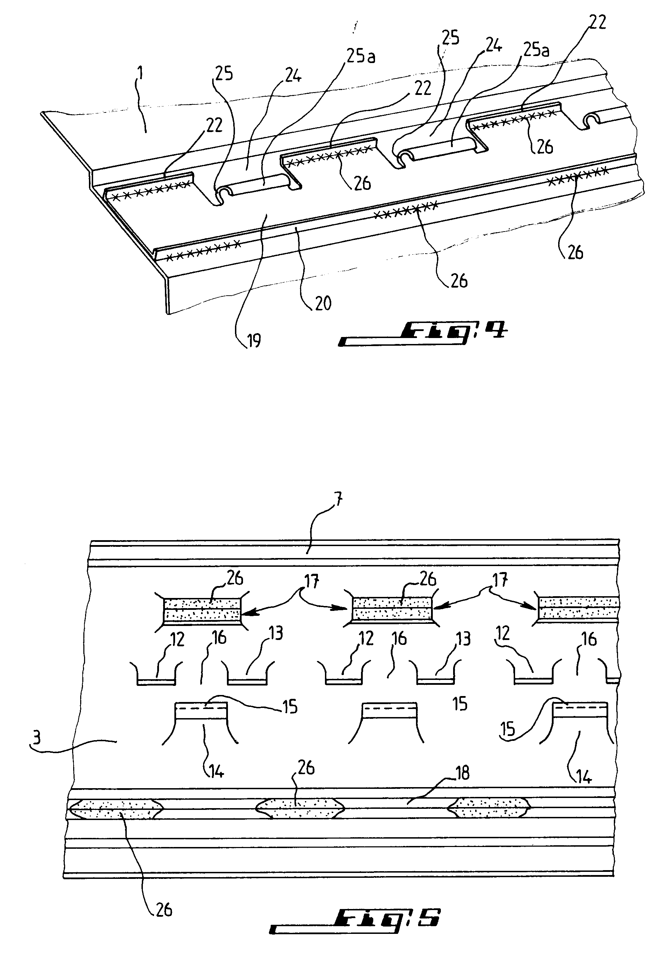

Comme il apparaît clairement sur les figures 2, 3 et 5, la face interne de l'enjoliveur 3, c'est-à-dire sa face tournée du côté du pavillon 1, comporte, au niveau de ses bords longitudinaux une première nervure 7 s'étendant sur toute la longueur de l'enjoliveur 3 et prenant appui sur le fond 8a d'une partie en creux 8 bordant le pavillon 1, et une deuxième nervure 9 légèrement en retrait par rapport au bord de l'enjoliveur 3. Cette deuxième nervure 9 prend appui, au montage, sur le côté 10 du pavillon 1, comme on le voit bien sur la figure 2.

Entre les deux nervures 7, 9, et dans l'axe longitudinal médian de l'enjoliveur 3, s'étend un premier groupe de bossages 12, 13, 14 entre lesquels peuvent être insérées par clippage des languettes arquées 25 faisant partie d'une bande de tôle 19 solidaire du pavillon 1 du véhicule.

Plus précisément, le groupe de bossages 12, 13, 14 se compose, comme on le voit bien sur la figure 5, d'une pluralité de bossages 12, 13 qui sont alignés et séparés par un intervalle 16 en regard duquel est situé, un intervalle sur deux, un autre bossage 14 appartenant à une autre ligne de bossages 14, cette ligne étant sensiblement parallèle à la ligne de bossages 12, 13. On pourrait parfaitement, sans sortir du cadre de l'invention, prévoir une ou des nervures continues à la place de la ligne des bossages 12, 13 et/ou 14.

Chaque bossage 14 comporte, à son extrémité libre, une lèvre, un ergot ou analogue 15 dirigé vers les bossages 12, 13. Cet ergot ou lèvre 15 retient, après clippage, le bord libre 25a des languettes arquées 25 formées dans la bande de tôle 19 fixée, par tout moyen approprié, sur le pavillon 1 du véhicule.

La bande de tôle 19, comme on le voit bien sur la figure 4, présente sensiblement une forme de U en section transversale, c'est-à-dire comporte des bords opposés relevés 20, 22 permettant la dépose de cordons de colle 26 permettant le collage de l'enjoliveur 3, comme on le décrira en détail plus loin.

Comme on le voit bien sur cette figure 4, les languettes arquées 25 sont réalisées par découpage suivant des créneaux 24, d'un bord de la bande de tôle 19, et par repliement de la partie découpée pour former la partie 25a arquée ou roulée vers l'intérieur du U que forme la bande de tôle 19.

La face interne de l'enjoliveur 3 comporte encore, entre la nervure 7 et la ligne de bossages 12, 13, une autre ligne de bossages 17 qui, en position montée de l'enjoliveur 3, seront collés par l'intermédiaire des cordons de colle 26 sur la bande de tôle 19 solidaire du pavillon 1 au voisinage du bord relevé 22. Egalement, entre la nervure 9 et la ligne de bossages 14, la face interne de l'enjoliveur 3 comporte une nervure 18 susceptible d'être fixée par des cordons de colle 26 sur le pavillon 1 du véhicule au voisinage du bord relevé 20.

Pour une meilleure compréhension de l'invention, on expliquera ci-après comment s'effectue la fixation de l'enjoliveur 3 sur le pavillon 1 du véhicule.

Tout d'abord, on dépose les cordons de colle 26 le long des bords relevés 20 et 22 de la bande de tôle 19 solidaire du pavillon 1.

Ensuite, on tourne la face de l'enjoliveur 1 munie des nervures et bossages susmentionnés vers la gouttière ou partie en creux 8, et cela en positionnant les languettes arquées 25 entre les bossages 12, 13 et 14.

On exerce alors une pression sur la face supérieure de l'enjoliveur 3 pour réaliser le clippage des languettes arquées 25 entre les bossages 12, 13, 14, comme on le voit bien sur la figure 2. Il en résulte que l'enjoliveur écrase les cordons de colle 26 et est maintenu en appui contre le pavillon 1 pendant tout le temps qu'il convient pour que les cordons de colle 26 reliant les bords 20 et 22 ainsi que les bossages 17 et la nervure 18, se polymérisent.

On obtiendra par conséquent une fixation et un collage efficace et homogène sur toute sa longueur de l'enjoliveur sur le pavillon du véhicule, c'est-à-dire sans aucun risque de détachement de l'enjoliveur en tel ou tel point, comme c'était le cas auparavant.

Bien entendu, l'invention n'est nullement limitée au mode de réalisation décrit et illustré qui n'a été donné qu'à titre d'exemple.

C'est ainsi qu'à la place des bossages on pourrait utiliser des nervures, sans sortir du cadre de l'invention, ou bien encore, à la place des nervures, on pourrait utiliser des bossages, à condition que, dans tous les cas, on réalise un clippage préalable de l'enjoliveur sur le pavillon du véhicule, pour le maintenir mécaniquement fermement en appui contre ce pavillon afin d'assurer un collage efficace.

## Revendications

1. Dispositif de fixation par clippage et collage d'un enjoliveur sur un élément (1) tel que par exemple un toit de véhicule, caractérisé en ce que l'enjoliveur (3) comporte sur l'une de ses faces un premier groupe de nervures, bossages ou analogues (12,13,14) entre lesquels peut être montée par clippage au moins une languette arquée et élastiquement déformable (25) appartenant audit élément (1) de façon à assurer le maintien de l'enjoliveur (3) en appui contre cet élément et le collage par des cordons de colle (26) de l'élément (1) sur un deuxième groupe de nervures, bossages ou analogues (17,18) appartenant à l'enjoliveur (3).

2. Dispositif selon la revendication 1, caractérisé en ce que les nervures ou bossages (17,18) du deuxième groupe sont situés de part et d'autre des nervures ou bossages (12,13,14) du premier groupe qui s'étendent suivant sensiblement l'axe longitudinal médian de l'enjoliveur (3).

3. Dispositif selon la revendication 1 ou 2, caractérisé en ce que la languette arquée précitée (25) est retenue par son bord libre (25a) sur une lèvre, un ergot ou analogue (15) prévu à l'extrémité libre de nervures ou bossages (14) du premier groupe.

4. Dispositif selon l'une des revendications 1 à 3, caractérisé en ce que la languette arquée précitée (25) est réalisée par découpage et repliement du bord d'une bande de tôle ou autre matériau (19) solidaire de l'élément ou toit de véhicule (1).

5. Dispositif selon l'une des revendications 1 à 4, caractérisé en ce que la bande précitée (19) comporte des bords opposés relevés (20,22) lui conférant sensiblement une forme de U en section transversale et permettant la dépose des cordons de colle (26) qui seront écrasés par le deuxième groupe de nervures ou bossages (17,18) de l'enjoliveur (3).

6. Dispositif selon l'une des revendications 1 à 5, caractérisé en ce que le premier groupe de nervures ou bossages (12,13,14) est constitué par des bossages (12,13) alignés et séparés par un intervalle (16) en regard duquel est prévu, un intervalle sur deux, un autre bossage (14), tandis que le deuxième groupe de nervures ou bossages (17,18) est constitué par une pluralité de bossages alignés (17) et par une nervure (18).

7. Dispositif selon l'une des revendications précédentes, caractérisé en ce que l'enjoliveur (3) comporte, au niveau de ses bords longitudinaux, deux nervures (7,9) s'étendant respectivement de part et d'autre des bossages alignés (17) et de la nervure (18).

## Claims

1. Device for the fastening through clipping and sticking of an ornamental piece onto an element (1) such for example a vehicle roof, characterized in that the ornamental piece (3) comprises on one of its faces a first group of ribs, bosses or the like (12, 13, 14) between which may be mounted through clipping at least one arcuate and elastically deformable tongue (25) belonging to the said element (1) so as to ensure the holding of the ornamental piece (3) in bearing relationship upon this element and the bonding with beads of adhesive (26) of the element (1) onto a second group of ribs, bosses or the like (17, 18) belonging to the ornamental piece (3).

2. Device according to claim 1, characterized in that the ribs or bosses (17, 18) of the second group are located on either side of the ribs or bosses (12, 13, 14) of the first group which extend substantially along the longitudinal middle axis of the ornamental piece (3).

3. Device according to claim 1 or 2, characterized in that the aforesaid arcuate tongue (25) is retained with its free edge (25a) onto a lip, a stud or the like (15) provided at the free end of the ribs or bosses (14) of the first group.

4. Device according to one of the claims 1 to 3, characterized in that the aforesaid arcuate tongue (25) is made by cutting out and bending of the edge of a strip of metal sheet or other material (19) made fast to the element or vehicle roof (1).

5. Device according to one of claims 1 to 4, characterized in that the aforesaid strip (19) comprises opposite raised edges (20, 22) conferring thereupon substantially the shape of a U in cross-section and permitting the depositing of beads of adhesive (26) which will be crushed by the second group of ribs or bosses (17, 18) of the ornamental piece (3).

6. Device according to one of claims 1 to 5, characterized in that the first group of ribs or bosses (12, 13, 14) is constituted by aligned bosses (12, 13) separated by a gap (16) in front of which is provided every other gap another boss (14) whereas the second group of ribs or bosses (17, 18) is constituted by a plurality of aligned bosses (17) and by one rib (18).

7. Device according to one of the foregoing claims, characterized in that the ornamental piece (3) comprises at the level of its longitudinal edges, two ribs (7, 9) extending on either side of the aligned bosses (17) and of the rib (18), respectively.

## Patentansprüche

1. Vorrichtung zur Befestigung einer Zierleiste an einem Element (1) wie z.B. einem Fahrzeugdach durch Verklemmen und Verkleben, dadurch gekennzeichnet, dass die Zierleiste (3) auf einer ihrer Flächen eine erste Gruppe von Rippen, Erhebungen oder dergleichen (12,13,14) aufweist, zwischen welchen wenigstens eine bogenförmige und elastisch verformbare zu dem besagten Element (1) gehörende Zunge (25) durch Verklemmung angeordnet werden kann, um das Halten der Zierleiste (3) in Abstützung an diesem Element und das Kleben des Elementes (1) an einer zweiten Gruppe von zu der Zierleiste (3) gehörenden Rippen, Erhebungen oder dergleichen (17,18) durch Kleberstreifen (26) zu gewährleisten.

2. Vorrichtung nach Anspruch 1, dadurch gekennzeichnet, dass die Rippen oder Erhebungen (17,18) der zweiten Gruppe beiderseits der Rippen oder Erhebungen (12,13,14) der ersten Gruppe, die sich etwa entlang der Längsmittelachse der Zierleiste (3) erstrecken, gelegen sind.

3. Vorrichtung nach Anspruch 1 oder 2, dadurch gekennzeichnet, dass die vorgenannte bogenförmige Zunge (25) mit ihrem freien Rand (25a) an einer an dem freien Ende von Rippen oder Erhebungen (14) der ersten Gruppe vorgesehenen Lippe, Nase oder dergleichen (15) zurückgehalten wird.

4. Vorrichtung nach einem der Ansprüche 1 bis 3, dadurch gekennzeichnet, dass die vorgenannte bogenförmige Zunge (25) durch Ausschneiden und Umbiegen des Randes eines mit dem Element bzw. Fahrzeugdach (1) fest verbundenen Streifens aus Blech oder einem anderen Werkstoff (19) hergestellt wird.

5. Vorrichtung nach einem der Ansprüche 1 bis 4, dadurch gekennzeichnet, dass der vorgenannte Streifen (19) entgegengesetzte hochgerichtete Ränder (20,22) aufweist, die ihm etwa eine U-förmige Querschnittsgestalt verleihen und den Auftrag der Kleberstreifen (26), die durch die zweite Gruppe von Rippen oder Erhebungen (17,18) der Zierleiste (3) zerdrückt werden, gestatten.

6. Vorrichtung nach einem der Ansprüche 1 bis 5, dadurch gekennzeichnet, dass die erste Gruppe von Rippen oder Erhebungen (12,13,14) durch fluchtend ausgerichtete Erhebungen (12,13) gebildet wird, die durch einen Zwischenraum (16) gegenüber welchen eine andere Erhebung (14) jeden zweiten Zwischenraum vorgesehen ist, getrennt sind, während die zweite Gruppe von Rippen oder Erhebungen (17,18) durch eine Vielheit von fluchtend ausgerichteten Erhebungen (17) und durch eine Rippe (18) gebildet wird.

7. Vorrichtung nach einem der vorangehenden Ansprüche, dadurch gekennzeichnet, dass die Zierleiste (3) im Bereich ihrer Längsränder zwei sich jeweils beiderseits der fluchtend ausgerichteten Erhebungen (17) und der Rippe (18) erstreckenden Rippen (7,9) aufweist.
